(19)

Europäisches
Patentamt
European
Patent Office
Office européen
des brevets

(11) **EP 3 125 260 B1**

(12) **EUROPEAN PATENT SPECIFICATION**

(45) Date of publication and mention
of the grant of the patent:
**01.01.2020 Bulletin 2020/01**

(51) Int Cl.:
**H01F 27/28** *(2006.01)*     **H01F 27/32** *(2006.01)*
**H01F 27/36** *(2006.01)*

(21) Application number: **15179227.2**

(22) Date of filing: **31.07.2015**

(54) **TRANSFORMER FOR A MODULAR, POWER ELECTRONIC CONVERTER**

TRANSFORMATOR FÜR EINEN MODULAREN, ELEKTRONISCHEN STROMWANDLER

TRANSFORMATEUR POUR UN CONVERTISSEUR ELECTRONIQUE DE PUISSANCE MODULAIRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**01.02.2017 Bulletin 2017/05**

(73) Proprietor: **ABB Schweiz AG**
**5400 Baden (CH)**

(72) Inventors:
• **Gradinger, Thomas**
**5032 Aarau/Rohr (CH)**
• **Kearney, Daniel**
**8004 Zürich (CH)**
• **Drofenik, Uwe**
**8053 Zürich (CH)**

(74) Representative: **Zimmermann & Partner**
**Patentanwälte mbB**
**Postfach 330 920**
**80069 München (DE)**

(56) References cited:
EP-A1- 0 061 608     DE-A1- 4 123 812
GB-A- 1 156 369     JP-A- S57 167 612
JP-A- S59 207 611     US-A- 3 500 197

EP 3 125 260 B1

# Description

## FIELD OF THE INVENTION

The invention pertains to the field of electrical power transformers. In particular, it relates to a transformer for a modular, power electronic converter in accordance with the preamble of the independent patent claim, and to a modular, power electronic converter.

## BACKGROUND OF THE INVENTION

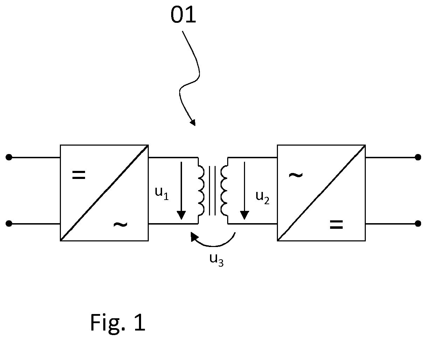

Electrical power transformers, which are known as power-electronic transformers (PET), allow conversion of voltage and frequency with an additional benefit of providing galvanic insulation. In known, exemplary PETs, input DC is inverted to medium-frequency primary AC of e.g. 10 kHz and fed to a primary side of a medium-frequency transformer (MFT). A secondary AC from a secondary side of said MFT is rectified again to provide an output DC, generally having a lower voltage. Optionally, this output DC may be converted to AC again, which preferably has an output frequency of e.g. several 10 Hz. Likewise, the input DC may have been obtained from an AC source by means of a rectifier. A converter cell 01 capable of performing this task is shown in Fig. 1.

PETs are, e.g. frequently used in modular converters for electric power supply of electric rail vehicles, e.g. trains or trams. Modular converters comprise a plurality of PET converter cells configured to produce from an AC input voltage a DC output voltage which - for traction applications - may be supplied to a drive unit or motor unit of the electric rail vehicle, but also to electrical installations on-board have recently received growing attention. Usually, the AC input voltage is supplied from a line, in particular an overhead line.

Exemplary modular converters are, e.g., described in WO 2014/037406 A1, DE 102010044322 A1, and EP 820893 A2. The converters disclosed comprise a plurality of converter cells, connected in series on a primary side or line side of the modular converter, and in parallel on a secondary side or load side of the modular converter. Each converter cell comprises a resonant DC-to-DC converter as MFT, which is connected to the line via a primary AC-to-DC converter. In the resonant DC-to-DC converter, a DC-to-AC converter on the primary side is connected via a resonant transformer with a further AC-to-DC converter on the secondary side, in particular a motor side. By connecting multiple converter cells in series on one side, and in parallel on the other side, it is possible to build galvanically insulated converters, e.g. from DC to DC, or from DC to AC, which may, in particular, be capable of stepping up or down voltages to or from a level above a rated voltage of semiconductor switches in the DC-to-AC or AC-to-DC converters. Due to the relatively high operating frequency of the MFT (which may be between 500Hz and 50kHz, and typically around e.g. 10 kHz; as opposed to an output frequency of typically between 10Hz and 100Hz, typically at least approximately 50 Hz) a size of the MFT can be kept small. The MFT is a central component in the converter cell. The size and cost of the MFT directly influence the size and cost of the converter cell and thus of the PET. The requirements for an MFT are different from those for typical power transformers. Next to the voltage $u_1$ across a primary winding and the voltage $u_2$ across a secondary winding of the MFT, there is a voltage $u_3$ from secondary to primary winding. $u_3$ is either DC (if the converter cell is used in a DC converter, and without optional inverter), or low-frequency AC. In the second case, the frequency of $u_3$ is much lower than that of $u_1$ and $u_2$, e.g. 50 Hz compared to 10 kHz. If many cells are connected in series on one side, then the magnitude of $u_3$ is much larger than that of $u_1$ and $u_2$. For an exemplary modular converter with $N$=24 converter cells connected in series on the primary side and in parallel on the secondary side of said modular converter, when an input voltage of $U_1$ = 24kV is applied to its primary side, for example, $u_1$ and $u_2$ may typically be about 1 kV, while $u_3$ may also be as high as 24kV. As a consequence, an electric insulation between the primary and secondary winding must be much significantly stronger than an insulation within a winding, generally referred to as inter-turn insulation.

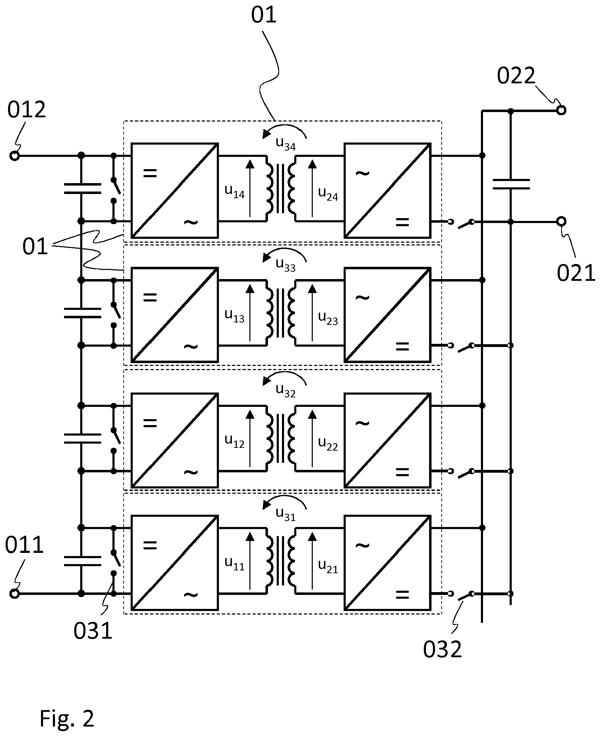

For illustration, Fig. 2 shows circuit schematics for a basic modular, power electronic converter in accordance with the prior art, with $N$=4 converter cells 01 connected in series between a first main terminal 011 and a second main terminal 012 on the primary side and in parallel between a third main terminal 021 and a fourth main terminal 022 on the secondary side of said modular converter. Preferably, a plurality of switches 031 and 032 is provided in order to allow for disconnecting individual converter cells from the modular converter under certain circumstances, e.g. to keep these converter cells as backup cells, or to operate the converter at voltage and/or load levels lower than maximally allowable. For the individual converter cells, voltages $u_{31}$, $u_{32}$, $u_{33}$, and $u_{34}$, from secondary to primary winding result as discussed above, and may assume large values, which, in particular applies to $u_{34}$.

It is known that good insulation can be provided to transformers by submerging them into oil or by casting the transformer in a solid or jellylike insulation material like, e.g., silica gel. While oil transformers are well established and well known, so are their disadvantages. They need a tight containment and tight bushings. The quality of the oil needs to be monitored, and oil constitutes a risk with respect to fire. Casting a transformer fully in a solid or jellylike electric insulation material, on the other hand, generally generates a cooling problem, as heat can only be transferred by conduction, and thus not very efficiently. This is a concern in particular for MFTs, as their power density (and loss density) is typically relatively high, since their typical operating frequencies allow for a relatively small size.

While it is relatively straightforward to design a dry-type MFT relying on air only for insulation (and convective cooling) large clearance distances $d_{clear}$ are required to provide sufficient electrical insulation, due to the magnitude of the voltage $u_3$. In particular, these clearance distances generally need to be respected not only between the primary winding, which in the above configuration represents a high-voltage winding of the MFT, and the secondary winding, which in the above configuration represents a low-voltage winding, but also between high-voltage winding and core, since the core is usually on ground potential. This leads to a generally unacceptable large size of a dry-type MFT. In particular, the high-voltage winding and the core will get uneconomically large and heavy. It is therefore advantageous to enclose, in particular to cast, the high-voltage winding into a solid insulation, typically made of a compound of epoxy resin and a filler material as, e.g., silica flour. Preferably, the low-voltage winding is also enclosed into a similar, separate, solid insulation. As a result, a first air gap is formed between the solid insulation of the high voltage winding and the low-voltage winding, in particular in-between the separate, solid insulations of high-voltage and low-voltage winding. Said first air gap enables efficient cooling similar to a purely air insulated system. However in contrast to the latter, the clearance distances can be kept significantly smaller. This is possible, since dielectric breakdown within the first air gap is generally acceptable in case of transient over-voltages such as, e.g., caused by a lightning impulse; while the solid insulation is dimensioned strong enough to withstand the transient overvoltage alone. It is, however, important that, during normal operation, an electric field in the first air gap around the high-voltage winding is low enough to avoid partial discharges. In addition, the considerations as laid out above apply not only to the first air gap between the low- and high-voltage winding, but, in case of a grounded core, also to a second air gap between high-voltage winding and grounded core.

To obtain a compact, cost-efficient and low-weight transformer, it is preferable to keep the clearance distances as small as possible. The clearance distances are therefore preferably chosen just as large as is necessary to guarantee a corona-free operation under normal, in particular under nominal, operating voltages, in particular as specified through a rated voltage. This is necessary to avoid damaging of the solid-insulation surfaces and breakdown in the long run.

A number of occurrence of fault events, as in particular caused, e.g., by lightning impulses, is small over a lifetime of the transformer, and such fault events are of relatively short duration. Discharges in the air in case of such faults can therefore be tolerated, and the damage done to the surface of the solid insulation is small. However, the thickness of the solid insulation needs to be chosen sufficiently such that the solid insulation can withstand the entire fault overvoltage alone (i.e. with the air broken down). Since the dielectric strength of solid insulation with respect to short overvoltages is very high, the solid insulation still doesn't need to get very thick. Typical values for a DC voltage of 50 kV can be a clearance distance $d_{clear}$ of about 60 mm, and/or a solid-insulation thickness $s_s$ of about 6 mm.

However, whenever a discharge in air occurs, as may be expected during a fault overvoltage, electric charge is deposited on a surface of the solid insulation. The local charge deposition creates a high peak of electric field that strongly stresses the solid insulation locally, leading, in particular, to a decreased lifetime of the transformer.

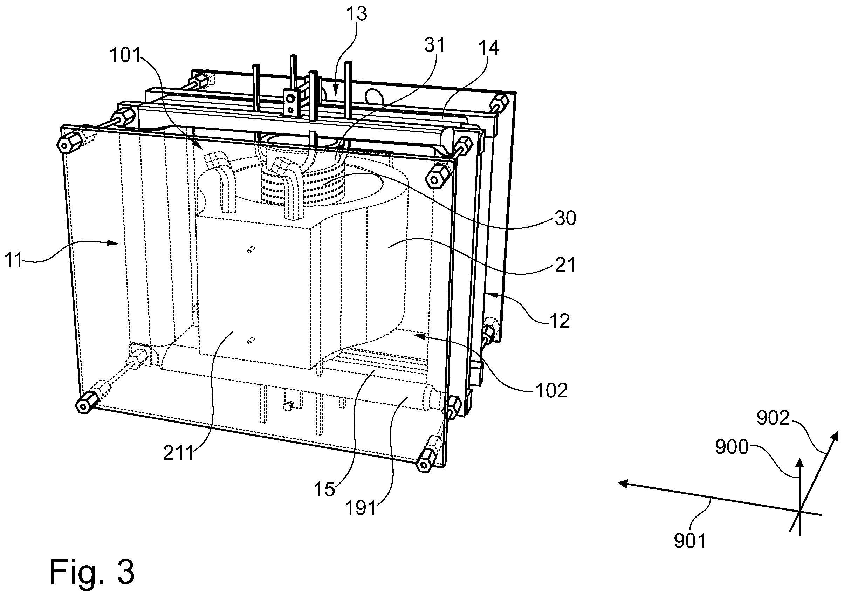

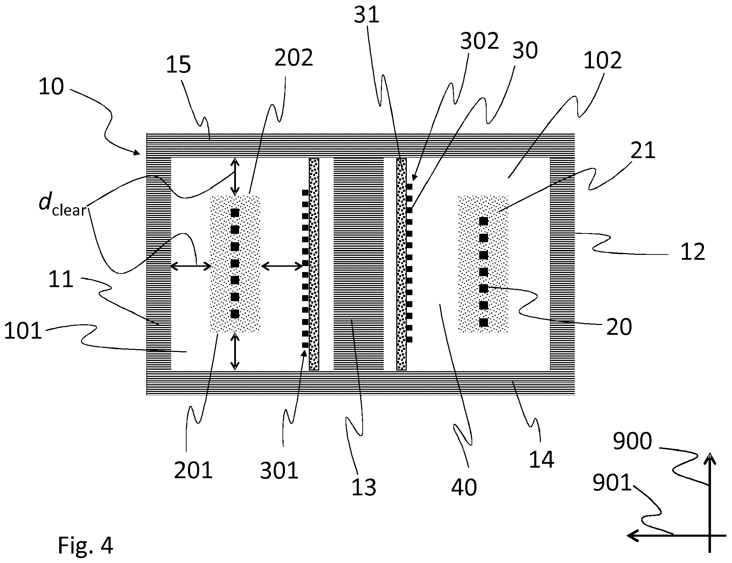

An insulation concept that can cope with the requirements as detailed above is illustrated in Figs. 3 and 4. Fig. 3 schematically shows a perspective view of a transformer in accordance with the prior art; Fig. 4 schematically shows a sectional view of the transformer from Fig. 3. The transformer is of shell type design, and comprises a core 10 having a first limb 11, a second limb 12 and a third limb 13 all extending in a first longitudinal direction 900. A first yoke 14 and a second yoke 15 extend in a second longitudinal direction 901 between and across the first limb 11, the second limb 12, and the third limb 13, so that first yoke 14, second yoke 15, first limb 11, and second limb 12 define and surround a core window, which is separated into a first sub-window 101 and a second sub-window 102 by the third limb 13.

A frame 19 is provided comprising two frame elements 191 arranged adjacent to the core 10 in a lateral direction 902, said lateral direction 902 being perpendicular to both the first longitudinal direction 900 and second longitudinal direction 901, and also referred to as z-direction. The frame elements 191 are held together by two rods 192 which are, e.g., screwed to the frame elements 191 by means of dielectric screws 52.

A first winding 20 serves as high-voltage winding surrounds a central portion of the third limb 13. To provide solid insulation, said first winding 20 is cast into synthetic material having a relative dielectric constant $\varepsilon_{r,synth} > 1$, preferably an epoxy resin, so that said epoxy resin forms an encapsulation 21 permanently enclosing said first winding 20. Encapsulation 21 and first winding 20 represent a first coil 2. A shape of the encapsulation 21 - and thus the first coil 2 - corresponds - at least essentially - to a hollow cylinder extending between a first termination 201 and a second termination 202 of the first coil 2, The encapsulation comprises two flattened regions 211 formed on opposite sides of its outer surface, so that the flattened regions 211 lie in two parallel planes, and each of the flattened regions 211 is located distant from the core 10. As is the case in the exemplary transformer shown in Fig. 3, each of the flattened regions 211 is preferably formed on a thickening of the encapsulation.

A second winding 30 formed on a bobbin 31 and serving as a secondary winding also surrounds the same central portion of the third limb 13 as the first winding, and is itself surrounded by the first winding 20, with a cooling channel 40 being established between an inner surface of the encapsulation 21 and the second winding 30. Second winding 30 and bobbin 31 thus represent a second coil.

The second winding 30 is held in position relative to the third limb 13 by the bobbin 31, which rests on the second yoke 15 when the transformer is orientated as depicted in Fig. 2. The second winding 30 is tightly wound onto bobbin 31 between a first termination 301 and a second termination 302 of said second winding 30, and possibly glued or otherwise attached by means of an adhesive. Preferably, the bobbin 31 is clamped between the first yoke 14 and the second yoke 15 for improved mechanical stability.

Dielectric plates 50 are attached to the frame 19 by means of dielectric rods 51, with said rods extending away from the frame 19 in lateral direction 902. The dielectric plates are held in position by dielectric nuts 52 threaded onto threads provided on the dielectric rods 51, which may also be used for attaching the dielectric rods 51 to the frame elements 191. This allows for a mechanically robust design, while avoiding high electric fields on surfaces of the dielectric plates, rods and nuts.

The first coil is attached to the dielectric plates 50 with each of the flattened regions 211 abutting against a surface of one of the dielectric plates 50, and is preferably fixed by means of dielectric screws and/or adhesive.

Dielectric plates 50 with attached dielectric rods 51 thus represent a supporting structure for the first winding 20, said supporting structure allowing to hold the first winding 20 in a defined position with respect to the core 10, in particular the third limb 13, while not extending into the core window, in particular not extending into a region between $z = -l_3/2$ and $z = +l_3/2$. In other words, the supporting structure is confined to a region outside of the core window. Likewise, the supporting structure does not extend into the cooling channel 40 provided between the first winding 20 and the second winding 30.

As may be seen, the use of the supporting structure as described above allows to respect a sufficient clearance distance $d_{clear}$ between the encapsulation 21 enclosing the first winding 20 and the core 10, preferably with $d_{clear} > S_{safety} V_{rated} / E_{breakdown}$, wherein $E_{breakdown}$ is an electric breakdown voltage, $V_{rated}$ a rated voltage for normal operation of the modular converter, and $S_{safety}$ a safety parameter for which $1.5 < S_{safety} < 5$ typically holds, in particular with $S_{safety} = 1.875$ or $S_{safety} = 3.75$.

Further details are given in European patent application EP 15166445.5.

In transformers with insulation as described above, i.e. comprising solid insulation as well as clearance distances in air, the solid insulation and an insulation provided by a stretch of air as provided by the clearance distance in air may be regarded as effectively being electrically connected in series. The voltage $u_3$ from secondary to primary winding, which is effectively being applied to said insulation, is then is divided into a voltage $u_a$ over the stretch of air and voltage $u_s$ over the solid insulation. For AC voltage, this division is capacitive, according to the permittivities $\varepsilon_a$ of air and $\varepsilon_s$ of solid insulation. Since $\varepsilon_a \approx 1$ and, in general, $\varepsilon_s \approx 5$, an electric field due to the voltage is somewhat pushed out of the solid insulation, an effect which is well known in solid insulation. Importantly, the permittivity values are quite well known and vary only moderately. For instance, $\varepsilon_s$ may vary between 4 and 6 depending on the exact type of epoxy system and the temperature. Correspondingly, the capacitive voltage division is well predictable and the design is robust under AC voltage operation. This applies, in particular, to transient overvoltages during faults.

The situation for DC is entirely different. The electric field is resistive rather than capacitive, and the voltage division is governed by the electric conductivities $\sigma_a$ of the air and $\sigma_s$ of the solid insulation. It is a well known problem in DC insulation that the conductivities of all insulation materials are very small, but that it is not known exactly how small they are. Either one of $\sigma_a$ and $\sigma_s$ may, possibly depending on circumstances, be significantly smaller than the other. For instance, if the air is very clean and free of ions, one may expect $\sigma_a$ to be much smaller than $\sigma_s$. If the air contains ions that can deposit on the solid surfaces, the opposite may be the case.

When $\sigma_a$ is much smaller than $\sigma_s$, substantially all of the electric field is concentrated in the air, and $u_s$ will be almost zero. The opposite happens if $\sigma_s$ is much smaller than $\sigma_a$. To obtain a robust design under such conditions, both air and solid insulation must be chosen thick enough to be able to withstand the entire voltage $u_3$. This results in a significant over-dimensioning of either the solid insulation, or the clearing distance, or both.

GB 1,156,369 discloses a high-voltage transformer with an external electrostatic shield having a grounded conductive coating. JP S59 207611 A discloses a high-voltage transformer with coil surfaces being covered with conductive layers that are grounded. EP 0 061 608 A1 discloses an air-cooled dry-type high-voltage transformer having a screen arranged between windings and core, with the screen being made of a conducting coating.

It is an object of the invention to provide a transformer for a modular, power electronic converter and to a method for assembling such a transformer which overcome the disadvantages as described above, and that, in particular, satisfies the constraint with respect to the air gap as discussed above.

This object is achieved as described below, in particular by a transformer for a modular power converter in accordance with the independent patent claim. Further exemplary embodiments are evident from the dependent claims and the following description.

SUMMARY OF THE INVENTION

A transformer for a modular converter in accordance with the present invention comprises the features defined by claim 1.

When a discharge in air occurs as described further above, the problem of electric charge deposition on a surface of the encapsulation is mitigated, as the charge may flow relatively freely and thus may distribute relatively quickly over the encapsulation, which significantly reduces an occurrence of high electric field peaks.

A transformer for a modular converter in accordance with the present invention comprises a voltage divider, which is provided in electrical connection with the first winding and the conductive coating, said voltage divider being configured to set an absolute value of an electric potential $|V_{coat}|$ at the conductive coating to below an absolute value of an electric potential $|V_{winding}|$ at the first winding, i.e. $|V_{coat}|<|V_{winding}|$.

Preferably, a conductivity $\sigma_c$ of the electrically conductive coating is chosen sufficiently low to avoid a building-up of unwanted eddy-currents in said conductive coating; but large enough to ensure that a homogenous electric potential may be established on the coating after a sufficiently short time, e.g. within a time range between one second and a few minutes.

According to a variant of the invention as referred to under one or more of the aspects and/or variants above, and related to transformer designs generally referred to as core type, both the first and second limb extend from the first to the second yoke and vice versa, and surround the core window. The first coil extends between a first termination and a second termination of said first coil in an axial direction generally in parallel with the first longitudinal direction, with the first winding surrounding at least a section of the first limb representing a first section of the core.

Preferably, the second winding, which also extends between a first termination and a second termination of said second winding in an axial direction generally in parallel with the first longitudinal direction, also surrounds at least a portion of the same first section of the core as the first winding, with the first coil, and the first winding, surrounding the second winding. The first winding may then represent a primary winding of the transformer, and/or the second winding a secondary winding. In addition, the primary winding may comprise a third winding connected in series or in parallel with the first winding, which may in particular surround at least a section of the second limb, and/or the secondary winding may comprise a fourth winding connected in series or in parallel with the second winding, which may in particular also surround at least a section of the second limb; wherein the third winding may, in particular, surround the fourth winding. Alternatively, the first winding may represent a secondary winding of the transformer, and/or the second winding a primary winding. In addition, the primary winding may comprise a third winding connected in series or in parallel with the second winding, which may in particular surround at least a section of the second limb, and/or the secondary winding may comprise a fourth winding connected in series or in parallel with the first winding, which may in particular also surround at least a section of the second limb; wherein the third winding may, in particular, surround the fourth winding.

According to a variant of the invention as referred to under one or more of the aspects and/or variants above, and related to transformer designs generally referred to as shell type, the first and second limb extend between the first and second yoke and vice versa, and surround the core window. A third limb extends between the first and second yoke, in particular in the first longitudinal direction; and between the first and the second limb, so that the core window is divided into a first sub-window and a second sub-window, preferably with both sub-windows extending through the core in the lateral direction. The first coil extends between the first termination and the second termination of said first coil in the axial direction generally in parallel with the first longitudinal direction, with the first winding surrounding at least a section of the third limb representing a first section of the core of the shell type design transformer.

Preferably, the second winding, which also extends between a first termination and a second termination of said second winding in an axial direction generally in parallel with the first longitudinal direction, also surrounds at least a portion of the same first section of the core as the first winding, with the first winding surrounding the second winding. The first winding may then represent a primary winding of the transformer, and/or the second winding a secondary winding. Alternatively, the first winding may represent a secondary winding of the transformer, and/or the second winding a primary winding.

According to a variant of the invention as referred to under one or more of the aspects and/or variants above, the core is generally a closed core, i.e. no air gaps are present within any of the limbs or yokes, nor between any pair of limb and yoke, so that the magnetic flux linking the primary and secondary windings travels - at least essentially - entirely within a high-permeability material, in general a ferromagnetic or ferromagnetic, which constitutes the core, so that - at least essentially - no loss of magnetic flux through air occurs.

According to a variant of the invention as referred to under one or more of the aspects and/or variants above, the core - rather than being a closed core - may comprise a gap filled with a low-permeability material, in general air or synthetic material, in particular plastics.

These and other aspects of the invention will become apparent from and elucidated with reference to the embodiments described hereinafter.

BRIEF DESCRIPTION OF THE DRAWINGS

The subject matter of the invention will be explained in more detail in the following text with reference to exemplary embodiments which are illustrated in the attached drawings, of which:

Fig. 1 shows circuit schematics for a converter cell of a modular, power electronic converter known from the prior art;

Fig. 2 shows circuit schematics for a modular, power electronic converter in accordance with the prior art;

Fig. 3 schematically shows a perspective view of a transformer in accordance with the prior art;

Fig. 4 schematically shows a sectional view of the transformer from Fig. 3;

Fig. 5 schematically shows a sectional view of a transformer in accordance with the present invention;

Fig. 6 schematically shows a top view of a transformer in accordance with the present invention;

Fig. 7 shows circuit schematics for a first embodiment of a modular, power electronic converter in accordance with the present invention;

Fig. 8 shows circuit schematics for another embodiment of a modular, power electronic converter in accordance with the present invention;

Fig. 9 shows circuit schematics for another embodiment of a modular, power electronic converter in accordance with the present invention.

In principle, identical reference symbols in the figures denote identical elements. For better readability, certain reference symbols have been omitted in certain drawings or where identical parts elements repeatedly in a single drawing.

DETAILED DESCRIPTION OF EXEMPLARY EMBODIMENTS

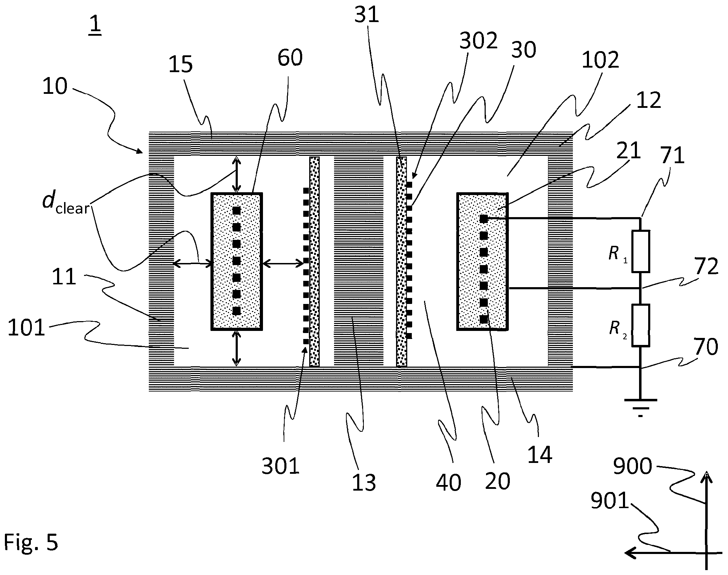

Fig. 5 shows a schematic representation of a preferred embodiment of a transformer 1 in accordance with the present invention. In accordance with the invention, the encapsulation 21 is covered with an electrically conductive coating 60. Preferably, the electrically conductive coating 60 may, e.g. have been applied by means of spraying, painting or application of a conductive foil.

A surface conductivity $\sigma_c \cdot d$ of the electrically conductive coating 60 having a thickness d is preferably chosen such that $10^{-4}\Omega^{-1} < \sigma_c \cdot d < 10^{-3}\Omega^{-1}$; giving rise to a surface resistivity p/d between 1kΩ and 10kΩ, where $\rho$ is a bulk resistivity of a material of the electrically conductive coating 60 in $\Omega \cdot$m, and $d$ the thickness of the electrically conductive coating 60 in m.

Alternatively or in addition to thus keeping the surface conductivity of the electrically conductive coating 60 reasonably low, a slit extending in the first longitudinal direction 900, i.e. in an axial direction of the first winding 20, may be provided in the electrically conductive coating 60. The slit in the coating interrupts a circular current path, thus greatly reducing eddy currents. Advantageously slit edges may be rounded to reduce field concentrations at the said edges.

A resistive voltage divider 7 with first and a second discrete resistors having resistances $R_1$ and $R_2$, respectively, and comprising an input port 71, an output port 72 corresponding to a mid-point of said voltage divider, and a reference port 70 is provided, with the input port 71 connected to the first winding 20, and the output port 72 connected to the conductive coating 60. The ports may be embodied by terminals provided for easy connectability, in which case the connections may e.g. be established by cables, wires or similar conductors. Alternatively, the connections may preferably also be achieved by means of gluing, brazing, soldering, or other attachment methods known as such, in particular when no terminals are provided. Voltages $u_a$ over the stretch of air and $u_s$ over the encapsulation are then governed by $u_a / R_1 = u_s / R_2$.

Values for $R_1$ and $R_2$ may be chosen with high accuracy, and hence the electrically conductive coating 60 can be set to a well-defined potential. As a consequence, electric field strengths both the stretch of air and within the solid insulation, become well-defined, so that none of the two needs to be over dimensioned.

It is noted that the very low electric conductivities $\sigma_a$ of air in the stretch of air and $\sigma_s$ of the encapsulation also correspond to resistances $R_a$ and $R_s$. If one assumes an effective cross-sectional area $A_a$ and $A_s$ for the stretch of air and the encapsulation 21, respectively, then these resistances $R_a$ and $R_s$ are governed by

$$R_a = \frac{s_a}{\sigma_a A_a}$$

and

$$R_s = \frac{s_s}{\sigma_s A_s}$$

As $R_a$ is effectively connected in parallel to $R_1$ and $R_s$ is effectively connected in parallel to $R_2$, $R_1$ is advantageously chosen small as compared to $R_a$, i.e. preferably chosen to fulfil $R_1 << R_a$, and $R_2$ is advantageously chosen small as compared to $R_s$, i.e. preferably chosen to fulfil $R_2 << R_s$. On the other hand $R_1$ and $R_2$ should not be chosen too small, since this would cause unacceptably high leakage currents and corresponding losses. Since $R_1$ and $R_2$ are both very small, suitable values for $R_1$ and $R_2$ may easily be found. Based on simulations that have been carried out, particularly good performance may be expected for $0.1 < R_1/R_a < 0.001$ and/or $0.1 < R_2/R_s < 0.001$. Such a choice of resistances will ensure that a resistive voltage division is dominated by $R_1$ and $R_2$ rather than by $R_s$ and $R_a$. Values between

$10^9$ $\Omega$ and $10^{11}$ $\Omega$ have been found to be practical for each of $R_1$ and $R_2$, in particular with $R_1 \approx 2.0 \cdot 10^{10}$ $\Omega$ and $R_2 \approx 1.0 \cdot 10^{10}$ $\Omega$.,

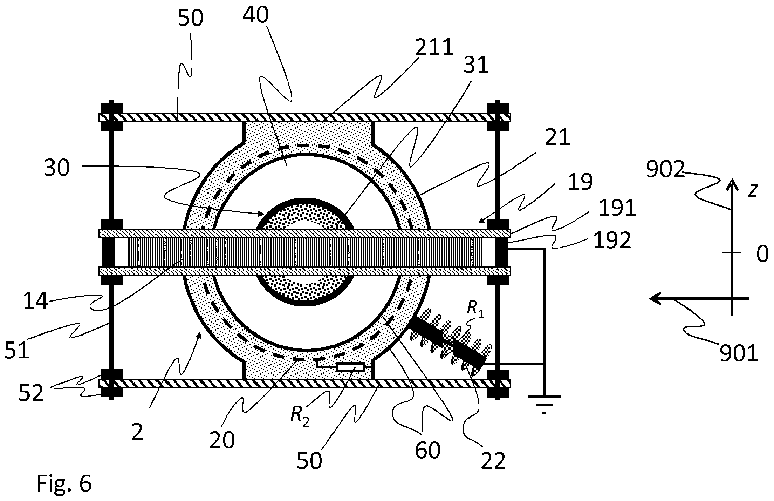

Fig. 6 shows a schematic representation of a top view of another preferred embodiment of a transformer in accordance with the present invention. The first resistor, in particular a resistive element, preferably formed from a material with controlled, low conductivity, of the first resistor is directly connected to the electrically conductive coating 60, with an resistor insulation 22 adjoining the electrically conductive coating 60. Preferably, the resistor insulation 22 comprises a plurality of fins to increase a creepage distance. In addition, the first resistor is preferably arranged in a region near the first winding 20 where the electric field is comparatively low. In particular, the first resistor is not arranged in a region between primary winding and grounded core, where an electric field is relatively high, and does in particular not extend into the core window. Furthermore, the first resistor is preferably arranged in such a way that it does not protrude beyond a box-shaped envelope of the transformer itself, i.e. the transformer without the first resistor. The first resistor does hence not contribute to an overall size of the transformer. Nevertheless, a clearance distance available for the resistor is significantly larger than the clearance between conductive coating and core. Hence, the first resistor can meet standards on air insulation which do not apply to the gap between conductive coating and core, as discussed above. Preferably, the second resistor is embedded in the encapsulation 21 representing the solid insulation, and hence does not contribute to an overall size of the transformer either.

All other aspects of the exemplary transformers as described in Figs. 5 and 6 are preferably embodied exactly as described further above with reference to Figs. 3 and 4, in particular with identical reference symbols denoting indicating identical elements (as also specified in the list of reference symbols as presented below).

Connecting the first resistor directly to the electrically conductive coating 60 as detailed above may alleviate a trade-off problem that may occur when using of discrete resistors: Because currents carried by the voltage divider are relatively small, cross-sections of conductors required for connecting the voltage divider may also be relatively small. Thin conductors, e.g. having cylindrical cross sections with small diameter, however, create relatively large electric fields close to their surface, in particular when relatively high voltages are applied over the voltage divider, which may be expected in the configurations as discussed above. In air, this may lead to corona discharge. While this may easily be counteracted by increasing the diameter, this is unwanted because of higher material investment, and because of increased space requirements.

In another preferred embodiment of a transformer in accordance with the present invention, instead of providing a discrete component for the second resistor as described above, a resistance of appropriate value may be provided on by deliberately increasing the conductivity $\sigma_s$, e.g. by adding conductive particles, preferably moderately conductive particles, to the solid insulation forming the encapsulation 21, thus obtaining a distributed resistance $R_2'$. Preferably, an effective resistance $R_2'$ thus provided by the solid insulation is adjusted such that it is significantly smaller than the resistance $R_a$, i.e. $R_2' \ll R_a$.

Similarly, in another preferred embodiment of a transformer in accordance with the present invention, instead of providing a discrete component for the first resistor as described above, a resistance of appropriate value may be provided on by deliberately increasing the conductivity $\sigma_a$ within the stretch of air, e.g. by providing means for humidifying and/or ionizing said air, thus obtaining a distributed resistance $R_1'$. Preferably, an effective resistance $R_1'$ thus provided by the stretch of air is adjusted such that it is significantly smaller than the resistance $R_s$, i.e. $R_1' \ll R_s$.

Employing one or more distributed resistances as part of the voltage divider may also alleviate the trade-off problem that may occur when using discrete resistors: Similar as detailed above for thin conductors, thin resistive elements, e.g. having cylindrical cross sections with small diameter, also, create relatively large electric fields close to their surface, in particular when relatively high voltages are applied. In air, this may lead to corona discharge. While this may easily be counteracted by providing effective insulator insulation, this may be unwanted because of additional material investment, and because of increased space requirements.

As an example not part of the present invention, the voltage divider is a capacitive voltage divider, in particular comprising a first capacitance $C_1$ between output port 72 and reference port 70 and a second capacitance $C_2$ between input port 71 and output port 72. For an operating frequency $\omega$ of the MFT, impedances $Z_1$ and $Z_2$ result, having absolute values $|Z_1| = (\omega \cdot C1)^{-1}$ and $|Z_2| = (\omega \cdot C_2)^{-1}$, respectively, for which the same considerations apply as detailed above for the values of $R_1$ and $R_2$.

As an example not part of the present invention, the voltage divider is an inductive voltage divider, in particular comprising a first inductance $L_1$ between output port 72 and reference port 70 and a second inductance $L_2$ between input port 71 and output port 72. For the operating frequency $\omega$ of the MFT, impedances $Z_1$ and $Z_2$ result, having absolute values $|Z_1| = \omega \cdot L_1$ and $|Z_2| = \omega \cdot L_2$, respectively, for which the same considerations apply as detailed above for the values of $R_1$ and $R_2$.

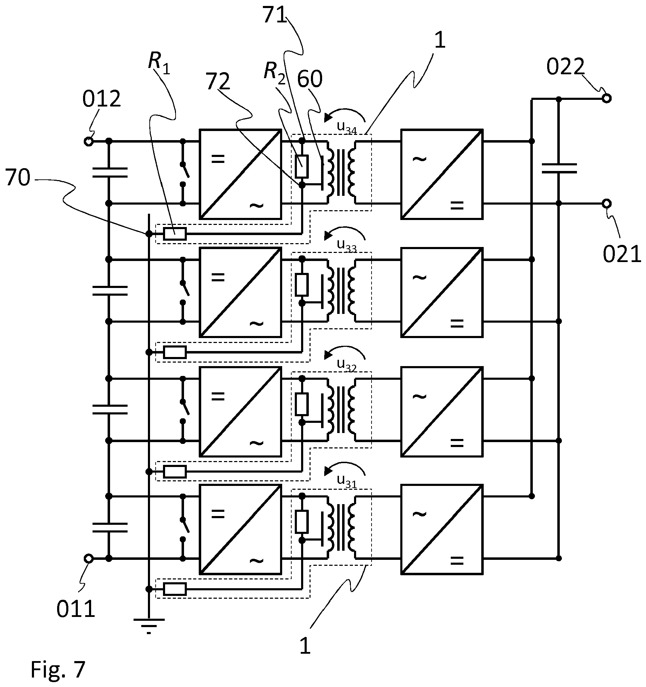

Fig. 7 shows circuit schematics for a basic modular, power electronic converter in accordance with a preferred embodiment of the present invention, with an exemplary $N$=4 converter cells 1 connected in series between first main terminal 011 and second main terminal 012 on the primary side and in parallel between third main terminal 021 and fourth main terminal 022 on the secondary side of said modular converter. Preferably, a plurality of switches 031 and 032 is provided in order to allow disconnecting individual converter cells from tem modular converter under certain circumstances. Each individual converter cell contains a transformer 1 as detailed above, with a conductive coating 60 provided on the encapsulation 21 which is provided as solid insulation of first winding 20 in accordance with the invention. A resistive voltage divider is formed by resistances $R_1$ and $R_{2,,}$ with its input port 71 connected to the first winding, its output port 72 connected to the conductive coating, and its reference port 70 connected to ground.

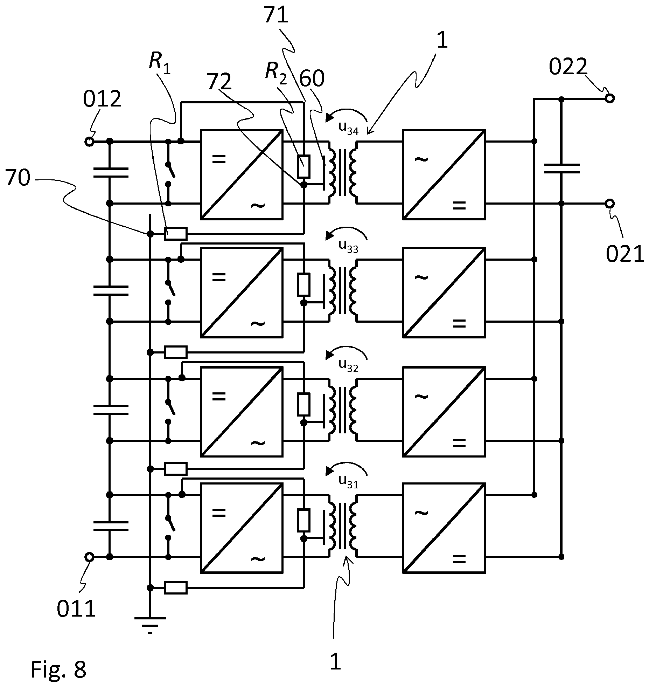

Fig. 8 shows circuit schematics for a basic modular, power electronic converter in accordance with another preferred embodiment of the present invention, with $N$=4 converter cells 1 connected in series between first main terminal 011 and second main terminal 012 on the primary side and in parallel between third main terminal 021 and fourth main terminal 022 on the secondary side of said modular converter. Preferably, a plurality of switches 031 and 032 is provided in order to allow disconnecting individual converter cells from tem modular converter under certain circumstances. Each individual converter cell contains a transformer 1 as detailed above, with a conductive coating 60 provided on the encapsulation 21 which is provided as solid insulation of first winding 20 in accordance with the invention. A resistive voltage divider is formed by resistances $R_1$ and $R_{2,,}$ with its output port 72 connected to the conductive coating 60, and its reference port 70 connected to ground. In contrast to the previous embodiment, the input port 71 of the voltage divider is connected an input port of the DC-to-AC converter of the respective converter cell. This allows for additional design flexibility, in particular in configurations where the voltage divider is not physically integrated with the transformer.

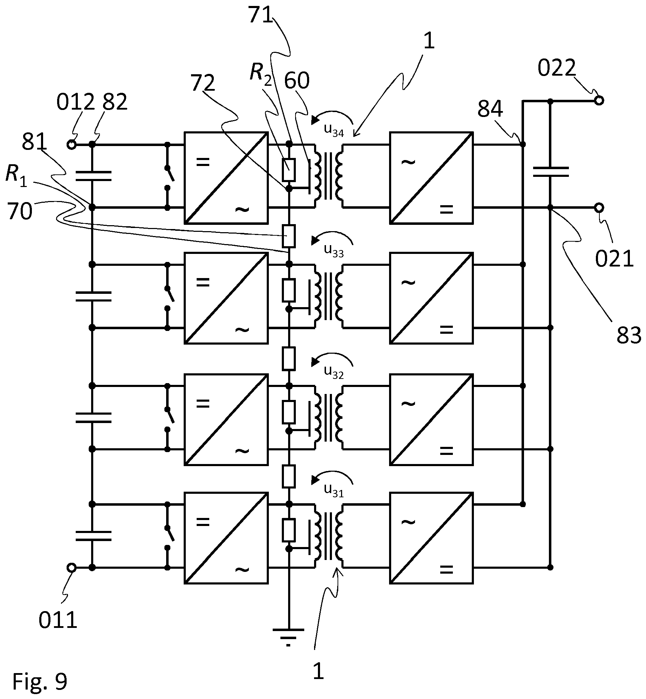

Fig. 9 shows circuit schematics for a basic modular, power electronic converter in accordance with another preferred embodiment of the present invention, with an exemplary $N$=4 converter cells 1 connected in series between first main terminal 011 and second main terminal 012 on the primary side and in parallel between third main terminal 021 and fourth main terminal 022 on the secondary side of said modular converter. Preferably, a plurality of switches 031 and 032 is provided in order to allow disconnecting individual converter cells from tem modular converter under certain circumstances. Each individual converter cell contains a transformer 1 as detailed above, with a conductive coating 60 provided on the encapsulation 21 which is provided as solid insulation of first winding 20 in accordance with the invention. A resistive voltage divider is formed by resistances $R_1$ and $R_{2,,}$ with its input port 71 connected to the first winding and its output port 72 connected to the conductive coating 60, In contrast to the previous embodiments, the reference port 70 of the voltage divider of the fourth converter cell is connected to the first winding of the third converter cell, the reference port of the voltage divider of the third converter cell to the first winding of the second converter cell, the reference port of the voltage divider of the second converter cell to the first winding of the first converter cell, and finally the reference port of the voltage divider of the first converter cell is connected to ground. This connection scheme for the voltage dividers significantly reduces the voltage over each of the voltage dividers, approximately by a factor equal to a number of active converter cells, i.e. N as long as all cells are active, which in turn mitigates the problem of high electric fields that may occur in a neighborhood of resistors which may form part of the voltage divider.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art and practising the claimed invention, from a study of the drawings, the disclosure, and the appended claims. In the claims, the term "comprising" does not exclude other elements or steps, and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope.

It is assumed that throughout this document, unless explicitly stated otherwise, a statement $a \approx b$ implies that $|a-b|/(|a|+|b|) < 1/10$, preferably $|a-b|/(|a|+|b|) < 1/100$, wherein a and $b$ may represent any variables and/or physical or mathematical quantity described defined, and/or referred to anywhere in this this document, or as otherwise known to a person skilled in the art. Further, a statement that a is at least approximately equal or at least approximately identical to b implies that $a \approx b$, preferably $a = b$. Further, it is assumed that, unless stated otherwise, a statement $a >> b$ implies that $a > 5b$, preferably $a > 100b$; and statement $a << b$ implies that $5a < b$, preferably $100a < b$.

It should be noted that the term "comprising" does not exclude other features, in particular elements or steps, and that the indefinite article "a" or "an" does not exclude the plural. Also elements described in association with different embodiments may be combined. It should also be noted that reference signs in the claims shall not be construed as limiting the scope of the claims.

The term connection is used to refer to an electrically conductive connection as commonly denoted by a connecting line in an electric circuit diagram, and formed, in particular, by a wire connection, a busbar, or a conduction line of an electric circuit board in a physical implementation of the circuit. When two circuit elements are referred to as being connected to one another, this indicates that a connection as defined above exists between the two, without any additional elements, in particular without discrete resistors, capacitors or inductors, interposed.

It will be appreciated by those skilled in the art that the present invention can be embodied in other specific forms without departing from the essential characteristics thereof. The presently disclosed embodiments are therefore considered in all respects to be illustrative and not restricted. The scope of the invention is indicated by the appended claims.

LIST OF REFERENCE SYMBOLS

| 01 | converter cell |
|---|---|
| 011 | first main terminal |
| 012 | second main terminal |
| 021 | third main terminal |
| 022 | fourth main terminal |
| 1 | transformer |
| 10 | core |
| 101 | first sub-window |
| 102 | second sub-window |
| 11 | first limb |
| 12 | second limb |
| 13 | third limb |
| 14 | first yoke |
| 15 | second yoke |
| 19 | frame |
| 191 | frame element |
| 192 | rod |
| 2 | first coil |
| 20 | first winding |
| 201 | first termination of the first coil |
| 202 | second termination of the first coil |
| 21 | encapsulation |
| 211 | flattened regions |
| 22 | resistor insulation |
| 30 | second winding |
| 301 | first termination of the second winding |
| 302 | second termination of the second winding |
| 31 | bobbin |
| 40 | cooling channel |
| 50 | dielectric plate |
| 51 | dielectric rod |
| 52 | dielectric screw |
| 70 | reference port of voltage divider |

(continued)

| 71 | input port of voltage divider |
|---|---|
| 72 | output port of voltage divider |
| 81 | fifth main terminal |
| 82 | sixth main terminal |
| 83 | seventh main terminal |
| 84 | eighth main terminal |
| 900 | first longitudinal direction |
| 901 | second longitudinal direction |
| 902 | lateral direction |

**Claims**

1. A transformer (1) for a modular converter comprising

    a) a core (10);
    b) a first coil (2), said first coil comprising

        i) a first winding (20), in particular a high-voltage winding, surrounding a first section of the core,
        ii) an encapsulation (21) made from solid, electrically insulating material and enclosing said first winding;

    c) a second winding (30), in particular a low-voltage winding, surrounding the first or a second section of the core;
    d) an electrically conductive coating (60) formed on at least a portion of an outer surface of the encapsulation, **characterized in that**
    e) a voltage divider is provided in electrical connection with the first winding (20) and the electrically conductive coating (60), said voltage divider being configured to set an absolute value of an electric potential $|V_{coat}|$ at the conductive coating to below an absolute value of an electric potential $|V_{winding}|$ at the first winding, i.e. $|V_{coat}| < |V_{winding}|$, and **in that**
    the voltage divider is a resistive voltage divider comprising
    f) a first resistance ($R_1$) provided between the first winding (20) and the electrically conductive coating (60), and
    g) a second resistance ($R_2$) provided between the electrically conductive coating (60) and a reference connection, preferably a ground connection.

2. The transformer (1) according to claim 1, further **characterized in that**

a) the voltage divider comprises an input port (71), in particular an input terminal, an output port (72), in particular an output terminal and a reference port (70), in particular an reference terminal;
b) the input port (71) of the voltage divider is connected to the first winding (20);
c) the output port (72) of the voltage divider is connected to the electrically conductive coating (60).

3. The transformer (1) according to claim 2, further **characterized in that** the reference port of the voltage divider is connected to ground potential.

4. The transformer (1) according to one of claims 1 to 3, further **characterized in that** first and/or second resistances are constituted by discrete resistors, preferably ohmic resistors.

5. The transformer (1) according to one of claims1 to 4, further **characterized in that** the first resistance is constituted by a resistive element, with a resistor insulation (22) formed on said resistive element, said resistor insulation (22) being contiguous with the electrically conductive coating (60).

6. The transformer (1) according to one of claims1 to 3, further **characterized in that** the second resistance is provided by the encapsulation (21), wherein said encapsulation (21) is formed by an electrically insulating material having an electric conductivity of $\sigma_s > 10^{-5}$ S/m, preferably $\sigma_s > 5.0\ 10^{-4}$ S/m, most preferably $\sigma_s > 5.0\ 10^{-3}$ S/m.

7. The transformer (1) according to one of the previous claims, wherein the electrically conductive coating (60) has a surface resistivity $\rho/d$ between 0.5 k$\Omega$ and 50k$\Omega$, preferably between 1k$\Omega$ and 10k$\Omega$.

8. The transformer (1) according to one of the previous claims, wherein a slit extending in a first longitudinal direction (900) is provided in the electrically conductive coating (60), said first longitudinal direction (900) corresponding to an axial direction of the first winding (20).

9. A modular, power electronic converter comprising,

a) a first main terminal (011), a second main terminal (012), a third main terminal (021) and fourth main terminal (022),
b) a plurality of converter cells with

i) a first subset of converter cells, said first subset preferably comprising all converter cells of the plurality of converter cells, being electrically connectable in series between the first main terminal (011) and the second main terminal (012) of said modular converter,
ii) a second subset of converter cells, said second subset preferably comprising all converter cells of the plurality of converter cells, being electrically connectable in parallel between the third main terminal (021) and the fourth main terminal (022) of said modular converter;

**characterized in that**
c) a plurality of, preferably all, converter cells from the first or the second subset comprises a transformer (1) according to one of claims 1 through 8.

10. The modular converter according to claim 11, further **characterized in that** the first subset comprises $N$ converter cells, each of which comprises

a) a transformer (1) according to one of claims 1 through 8,
b) a fifth, sixth, seventh and eighth main terminal, wherein

i) the fifth main terminal of the first converter cell of the first subset is connected to the first main terminal (011) of the modular, power electronic converter,
ii) the sixth main terminal of the $N$-th converter cell of the first subset is connected to the second main terminal (012) of the modular, power electronic converter, and
iii) for $n = 2, ..., N$, the sixth main terminal of the ($n$-1)-th converter cell is connected to the fifth main terminal of the ($n$-th) converter cell

c) for $n = 2, ..., N$, the reference terminal (70) of the voltage divider for the transformer of the n-th converter cell is connected to the conductive layer of the transformer for the ($n$-1)-th converter cell,
d) the reference terminal (70) of the voltage divider of the transformer of the first converter cell is connected to ground potential.

**Patentansprüche**

1. Transformator (1) für einen modularen Umrichter, umfassend

a) einen Kern (10);
b) eine erste Spule (2), wobei die erste Spule umfasst

i) eine erste Wicklung (20), insbesondere eine Hochspannungswicklung, die einen ersten Abschnitt des Kerns umgibt,
ii) eine Verkapselung (21) aus festem, elektrisch isolierendem Material, die die erste Wicklung umschließt;

c) eine zweite Wicklung (30), insbesondere eine Niederspannungswicklung, die den ersten oder einen zweiten Abschnitt des Kerns umgibt;
d) eine elektrisch leitfähige Beschichtung (60), die auf mindestens einem Teil einer Außenfläche der Verkapselung ausgebildet ist, **dadurch gekennzeichnet, dass**

e) ein Spannungsteiler in elektrischer Verbindung mit der ersten Wicklung (20) und der elektrisch leitfähigen Beschichtung (60) vorgesehen ist, wobei der Spannungsteiler dazu ausgelegt ist, einen Absolutwert eines elektrischen Potentials $|V_{coat}|$ an der leitfähigen Beschichtung auf unter einen Absolutwert eines elektrischen Potentials $|V_{winding}|$ an der ersten Wicklung einzustellen, d.h. $|V_{coat}| < |V_{winding}|$, und dadurch, dass der Spannungsteiler ein resistiver Spannungsteiler ist, umfassend
f) einen ersten Widerstand ($R_1$), der zwischen der ersten Wicklung (20) und der elektrisch leitfähigen Beschichtung (60) vorgesehen ist, und
g) einen zweiten Widerstand ($R_2$), der zwischen der elektrisch leitfähigen Beschichtung (60) und einer Referenzverbindung, vorzugsweise einer Masseverbindung, vorgesehen ist.

2. Transformator (1) nach Anspruch 1, ferner **dadurch gekennzeichnet, dass**

a) der Spannungsteiler einen Eingangsport (71), insbesondere einen Eingangsanschluss, einen Ausgangsport (72), insbesondere einen Ausgangsanschluss und einen Referenzport (70), insbesondere einen Referenzanschluss, umfasst;
b) der Eingangsport (71) des Spannungsteilers mit der ersten Wicklung (20) verbunden ist;
c) der Ausgangsport (72) des Spannungsteilers mit der elektrisch leitfähigen Beschichtung (60) verbunden ist.

3. Transformator (1) nach Anspruch 2, ferner **dadurch gekennzeichnet, dass** der Referenzport des Spannungsteilers mit dem Massepotential verbunden ist.

4. Transformator (1) nach einem der Ansprüche 1 bis 3, ferner **dadurch gekennzeichnet, dass** erste und/oder zweite Widerstände aus diskreten Widerständen, vorzugsweise ohmschen Widerständen, bestehen.

5. Transformator (1) nach einem der Ansprüche 1 bis 4, ferner **dadurch gekennzeichnet, dass** der erste Widerstand aus einem Widerstandselement mit einer auf dem Widerstandselement ausgebildeten Widerstandsisolation (22) besteht, wobei die Widerstandsisolation (22) mit der elektrisch leitfähigen Beschichtung (60) zusammenhängt.

6. Transformator (1) nach einem der Ansprüche 1 bis 3, ferner **dadurch gekennzeichnet, dass** der zweite Widerstand durch die Verkapselung (21) bereitgestellt wird, wobei die Verkapselung (21) durch ein elektrisch isolierendes Material mit einer elektrischen Leitfähigkeit von $\sigma_s > 10^{-5}$ S/m, bevorzugt $\sigma_s > 5{,}0 \cdot 10^{-4}$ S/m, am meisten bevorzugt $\sigma_s > 5{,}0 \cdot 10^{-3}$ S/m gebildet ist.

7. Transformator (1) nach einem der vorhergehenden Ansprüche, wobei die elektrisch leitfähige Beschichtung (60) einen Oberflächenwiderstand $p/d$ zwischen 0,5 kΩ und 50 kΩ, vorzugsweise zwischen 1 kΩ und 10 kΩ aufweist.

8. Transformator (1) nach einem der vorhergehenden Ansprüche, wobei in der elektrisch leitfähigen Beschichtung (60) ein sich in einer ersten Längsrichtung (900) erstreckender Schlitz vorgesehen ist, wobei die erste Längsrichtung (900) einer axialen Richtung der ersten Wicklung (20) entspricht.

9. Modularer, elektronischer Stromumrichter, umfassend,

a) einen ersten Hauptanschluss (011), einen zweiten Hauptanschluss (012), einen dritten Hauptanschluss (021) und einen vierten Hauptanschluss (022),
b) mehrere Umrichterzellen mit

i) einer ersten Teilmenge von Umrichterzellen, wobei die erste Teilmenge vorzugsweise alle Umrichterzellen der mehreren Umrichterzellen umfasst und elektrisch in Reihe zwischen dem ersten Hauptanschluss (011) und dem zweiten Hauptanschluss (012) des modularen Umrichters verbindbar ist,
ii) einer zweiten Teilmenge von Umrichterzellen, wobei die zweite Teilmenge bevorzugt alle Umrichterzellen der mehreren Umrichterzellen umfasst und zwischen dem dritten Hauptanschluss (021) und dem vierten Hauptanschluss (022) des modularen Umrichters elektrisch parallel verbindbar ist;

**dadurch gekennzeichnet, dass**
c) mehrere, vorzugsweise alle, Umrichterzellen aus der ersten oder zweiten Teilmenge einen Transformator (1) nach einem der Ansprüche 1 bis 8 umfassen.

**10.** Modularer Umrichter nach Anspruch 11, ferner **dadurch gekennzeichnet, dass** die erste Teilmenge N Umrichterzellen umfasst, von denen jede Folgendes umfasst

a) einen Transformator (1) nach einem der Ansprüche 1 bis 8,

b) einen fünften, sechsten, siebten und achten Hauptanschluss, wobei

i) der fünfte Hauptanschluss der ersten Umrichterzelle der ersten Teilmenge mit dem ersten Hauptanschluss (011) des modularen, elektronischen Stromumrichters verbunden ist,

ii) der sechste Hauptanschluss der *N*-ten Umrichterzelle der ersten Teilmenge mit dem zweiten Hauptanschluss (012) des modularen, elektronischen Stromumrichters verbunden ist und

iii) für *n* = 2, ..., *N,* ist der sechste Hauptanschluss der (*n*-1)-ten Umrichterzelle mit dem fünften Hauptanschluss der (*n*-ten) Umrichterzelle verbunden.

c) für *n* = 2, ..., *N*, der Referenzanschluss (70) des Spannungsteilers für den Transformator der *n*-ten Umrichterzelle ist mit der leitfähigen Schicht des Transformators für die (*n*-1)-te Umrichterzelle verbunden,

d) die Referenzklemme (70) des Spannungsteilers des Transformators der ersten Umrichterzelle mit dem Massepotential verbunden ist.

## Revendications

**1.** Transformateur (1) pour un convertisseur modulaire, comprenant

a) un noyau (10) ;

b) une première bobine (2), ladite première bobine comprenant

i) un premier enroulement (20), en particulier un enroulement haute tension, entourant une première section du noyau,

ii) un enrobage (21) réalisé à partir d'un matériau solide, électriquement isolant et enfermant ledit premier enroulement ;

c) un deuxième enroulement (30), en particulier un enroulement basse tension, entourant la première ou une deuxième section du noyau ;

d) un revêtement électroconducteur (60) formé sur au moins une partie d'une surface extérieure de l'enrobage, **caractérisé en ce que**

e) un diviseur de tension est prévu en connexion électrique avec le premier enroulement (20) et le revêtement électroconducteur (60), ledit diviseur de tension étant configuré pour régler une valeur absolue d'un potentiel électrique $|V_{coat}|$ au niveau du revêtement conducteur au-dessous d'une valeur absolue d'un potentiel électrique $|V_{winding}|$ au niveau du premier enroulement, c'est-à-dire $|V_{coat}| < |V_{winding}|$, et **en ce que**

le diviseur de tension est un diviseur de tension résistif comprenant

f) une première résistance ($R_1$) prévue entre le premier enroulement (20) et le revêtement électroconducteur (60), et

g) une deuxième résistance ($R_2$) prévue entre le revêtement électroconducteur (60) et une connexion de référence, de préférence une prise de terre.

**2.** Transformateur (1) selon la revendication 1, en outre **caractérisé en ce que**

a) le diviseur de tension comprend un port d'entrée (71), en particulier une borne d'entrée, un port de sortie (72), en particulier une borne de sortie et un port de référence (70), en particulier une borne de référence ;

b) le port d'entrée (71) du diviseur de tension est connecté au premier enroulement (20) ;

c) le port de sortie (72) du diviseur de tension est connecté au revêtement électroconducteur (60).

**3.** Transformateur (1) selon la revendication 2, en outre **caractérisé en ce que** le port de référence du diviseur de tension est connecté au potentiel de terre.

**4.** Transformateur (1) selon l'une quelconque des revendications 1 à 3, en outre **caractérisé en ce que** des première et/ou deuxième résistances sont des résistances discrètes, de préférence des résistances ohmiques.

**5.** Transformateur (1) selon l'une quelconque des revendications 1 à 4, en outre **caractérisé en ce que** la première résistance est un élément résistif, avec une isolation de résistance (22) formée sur ledit élément résistif, ladite isolation de résistance (22) étant contiguë au revêtement électroconducteur (60).

**6.** Transformateur (1) selon l'une quelconque des revendications 1 à 3, en outre **caractérisé en ce que** la deuxième résistance est fournie par l'enrobage (21), dans lequel ledit enrobage (21) est formé par un matériau électriquement isolant présentant une conductivité électrique de $\sigma_s > 10^{-5}$ S/m, de préférence $\sigma_s > 5,0 \cdot 10^{-4}$ S/m, de plus grande préférence $\sigma_s > 5,0 \cdot 10^{-3}$ S/m.

**7.** Transformateur (1) selon l'une quelconque des revendications précédentes, dans lequel le revêtement électroconducteur (60) présente une résistivité de surface p/d entre 0,5 kΩ et 50 kΩ, de préférence entre 1 kΩ et 10 kΩ.

**8.** Transformateur (1) selon l'une quelconque des revendications précédentes, dans lequel une fente s'étendant dans une première direction longitudinale (900) est prévue dans le revêtement électroconducteur (60), ladite première direction longitudinale (900) correspondant à une direction axiale du premier enroulement (20).

**9.** Convertisseur électronique de puissance modulaire, comprenant

   a) une première borne principale (011), une deuxième borne principale (012), une troisième borne principale (021) et une quatrième borne principale (022),
   b) une pluralité de cellules de convertisseur avec

      i) un premier sous-ensemble de cellules de convertisseur, ledit premier sous-ensemble comprenant de préférence toutes les cellules de convertisseur de la pluralité de cellules de convertisseur, qui peuvent être électriquement connectées en série entre la première borne principale (011) et la deuxième borne principale (012) dudit convertisseur modulaire,
      ii) un deuxième sous-ensemble de cellules de convertisseur, ledit deuxième sous-ensemble comprenant de préférence toutes les cellules de convertisseur de la pluralité de cellules de convertisseur, qui peuvent être électriquement connectées en parallèle entre la troisième borne principale (021) et la quatrième borne principale (022) dudit convertisseur modulaire ;

      **caractérisé en ce que**
      c) une pluralité de cellules de convertisseur, de préférence toutes, provenant du premier ou du deuxième sous-ensemble comprend un transformateur (1) selon l'une quelconque des revendications 1 à 8.

**10.** Convertisseur modulaire selon la revendication 11, en outre **caractérisé en ce que** le premier sous-ensemble comprend N cellules de convertisseur, dont chacune comprend

   a) un transformateur (1) selon l'une quelconque des revendications 1 à 8,
   b) une cinquième, sixième, septième et huitième borne principale, dans lequel

      i) la cinquième borne principale de la première cellule de convertisseur du premier sous-ensemble est connectée à la première borne principale (011) du convertisseur électronique de puissance modulaire,
      ii) la sixième borne principale de la Nième cellule de convertisseur du premier sous-ensemble est connectée à la deuxième borne principale (012) du convertisseur électronique de puissance modulaire, et
      iii) pour n = 2, ..., N, la sixième borne principale de la (n-1)ième cellule de convertisseur est connectée à la cinquième borne principale de la (nième) cellule de convertisseur,

   c) pour n = 2, ..., N, la borne de référence (70) du diviseur de tension pour le transformateur de la nième cellule de convertisseur est connectée à la couche conductrice du transformateur pour la (n-1)ième cellule de convertisseur,
   d) la borne de référence (70) du diviseur de tension du transformateur de la première cellule de convertisseur est connectée au potentiel de terre.

Fig. 1

Fig. 2

Fig. 3

Fig. 4

EP 3 125 260 B1

Fig. 5

Fig. 6

Fig. 7

Fig. 8

Fig. 9

**REFERENCES CITED IN THE DESCRIPTION**

**Patent documents cited in the description**

- WO 2014037406 A1
- DE 102010044322 A1
- EP 820893 A2
- EP 15166445
- GB 1156369 A
- JP S59207611 A
- EP 0061608 A1